# EUROPÄISCHE PATENTSCHRIFT

(11) **EP 3 595 996 B1**
(45) Veröffentlichungstag und Bekanntmachung des Hinweises auf die Patenterteilung: **24.03.2021**
(21) Anmeldenummer: 18713792.2
(22) Anmeldetag: 21.02.2018
(51) Int. Cl.: B65G 63/00, E04F 15/024, B65B 25/18

(54) **FLURBODENSYSTEM**
HALLWAY FLOORING SYSTEM
SYSTÈME DE REVÊTEMENT DE SOL DE COULOIR

(30) Priorität: 23.03.2017 DE 102017106282
(43) Veröffentlichungstag der Anmeldung: 22.01.2020
(73) Patentinhaber: Secura Services AG, 8404 Winterthur (CH)
(72) Erfinder: ALT, Janosch, 65207 Wiesbaden (DE); EPING, Udo, 64297 Darmstadt (DE)
(74) Vertreter: Boult Wade Tennant LLP
(86) Internationale Anmeldenummer: PCT/EP2018/054304
(87) Internationale Veröffentlichungsnummer: WO 2018/172011

(56) Entgegenhaltungen:
- WO-A1-91/19063
- DE-A1- 3 313 010
- DE-A1- 19 733 647
- US-A- 4 901 490

## Beschreibung

Flurbodensysteme werden in verschiedenen Bereichen verwendet, um einen ebenen Untergrund bzw. ebene Laufwege bereitzustellen. So ist aus der DE 197 33 647 A1 und der DE 33 13 010 A1 bekannt, Profilschienen zur Ausbildung eines Zwischenbodens in Schaltstationsgebäuden einzusetzen. Weitere Beispiele für ähnliche Fußbodensysteme sind aus der US 4, 901, 490 B1 und der WO 91/19063 bekannt.

Die Aufgabe der Erfindung besteht darin, ein Flurbodensystem auch im Marinebereich in Schiffen oder im Maschinenbaubereich einsetzen zu können, um Laufwege zur Bedienung oder zur Wartung von Maschinen herzustellen.

Erfindungsgemäß wir die Aufgabe durch ein Flurbodensystem mit den Merkmalen des Anspruches 1 gelöst.

Solche Flurbodensysteme bestehen aus einem Unterbau, an dem Schienenelemente befestigt sind, auf die Bodenelemente aufgelegt werden. Der Unterbau besteht beispielsweise aus vertikalen und horizontalen Trägern, die sich auf einem Untergrund oder an einer Maschine abstützen bzw. an diesen befestigt sind. Die Schienenelemente werden an diesem Unterbau derart befestigt, dass die Bodenelemente in der gewünschten Lage, vorzugsweise waagrecht, aufgelegt werden können.

Die Schienenelemente haben üblicherweise einen Haltebereich, mit dem eine flexible Montage des Schienenelements am Unterbau erfolgen kann, sowie einen Auflagebereich für ein Bodenelement. Der Auflagebereich hat eine Auflagefläche, auf der das Bodenelement aufliegt und an der das Bodenelement fixiert werden kann. Des Weiteren ist ein Überstand vorgesehen, der über die Auflagefläche vorsteht. Im Marinebereich wird ein solcher Überstand allgemein auch als Süllkante bezeichnet. Dieser Überstand hat mehrere Funktionen. Zum einen erfolgt durch den Überstand eine Vorpositionierung des Bodenelements auf den Schienenelementen. Der Überstand bildet dabei einen seitlichen Anschlag für ein Bodenelement. Zum anderen hat der Überstand eine Schutzfunktion, da auf dem Bodenelement liegende Gegenstände nicht versehentlich über den Rand eines Bodenelements hinausgelangen und herunterfallen können. Darüber hinaus kann am Überstand ein Geländer oder ein anderes zusätzliches Element des Flurbodensystems befestigt werden. Die originäre Funktion einer Süllkante ist die Abgrenzung gegen Schwallwasser an Bordluken.

Es ist auch bekannt Schienenelemente herzustellen, indem ein Winkelelement auf eine Schiene aufgeschweißt wird. Dadurch haben diese Schienenelemente aber ein sehr hohes Gewicht. Zudem ist der Herstellungsaufwand sehr hoch. Darüber hinaus wird durch das Winkelelement die Bauhöhe des Schienenelements erhöht. Dies führt dazu, dass auch an Schienenelementen, die grundsätzlich keine Überstand aufweisen müssen, beispielsweise, weil diese in der Mitte einer Bodenfläche angeordnet sind, ein Distanzelement vorgesehen werden muss, um sicherzustellen, dass die Auflageflächen aller Schienenelemente auf einer Höhe liegen. Dadurch wird das Gewicht des Flurbodensystems weiter erhöht.

Dadurch, dass das Schienenelement einstückig aus einem Metallprofil hergestellt ist, hat es also kein separates Winkelelement, das auf eine Schiene bzw. den Haltebereich aufgeschweißt werden muss, sondern der Überstand ist einstückig mit dem Haltebereich ausgebildet. Dadurch entfallen zusätzliche Fertigungsschritte, wodurch die Herstellung des Schienenelements einfacher und günstiger ist. Durch den Wegfall des separaten Winkelelements, insbesondere des Wegfalls des auf der Schiene bzw. dem Haltebereich aufliegenden Schenkels des Winkelelements, wird das Schienenelement zudem leichter, so dass auch ein Flurbodensystem mit einem solchen Schienenelement deutlich leichter ist. Der Wegfall des auf dem Haltebereich aufliegenden Schenkels des Winkelelements hat zudem auch eine geringere Bauhöhe im Vergleich zu den bekannten Schienenelementen zur Folge, so dass das Schienenelement und somit das Flurbodensystem flacher ist. Ein solches Schienenelement erfüllt darüber hinaus alle Anforderungen an die Festigkeit der Schienenelemente. Des Weiteren bestehen bei einem solchen Schienenelement keine Einschränkungen bezüglich der Anbringung von Geländer, Sturzsicherungen oder andere Anbauteilen.

Das Schienenelement kann beispielsweise im Strangpressverfahren hergestellt werden. Alternativ kann das Schienenelement auch aus einem Blech durch Umformen hergestellt sein. Das Schienenelement wird dabei aus einem ebenen Metallblech, beispielsweise durch Falten bzw. Biegen hergestellt. Dadurch ist eine schnelle und individuelle Fertigung der Schienenelemente möglich.

Beispielsweise wird der Überstand durch Umfalten eines Blechstreifens hergestellt ist, wobei der Blechstreifen an einem ersten Rand in die Auflagefläche übergeht und an einem gegenüberliegenden zweiten Rand in eine Seitenfläche übergeht. Der Überstand ist also durch einen Abschnitt des Bleches gebildet, der durch Umformen, beispielsweise durch Falten, vom übrigen Schienenelement absteht. Dies ermöglicht eine einfache Herstellung des Überstandes.

Bei dieser Ausführungsform ist der Überstand vorzugsweise durch zwei Lagen des Blechstreifens gebildet, die flächig aneinander anliegen, wobei die Lagen am der Auflagefläche abgewandten Ende mit einem Umformbereich verbunden sind. Beispielsweise bildet der Umformberiech eine Biege- oder Faltkante, so dass die Lagen flächig aufeinander aufliegen. Optional kann aber auch ein Wulst oder eine Verdickung vorgesehen sein, die beispielsweise ein Abheben eines Bodenelements verhindert.

Eine Außenfläche des Überstandes ist beispielsweise in Verlängerung einer Seitenfläche der Halteschiene angeordnet ist, wodurch die Anzahl der Umformvorgänge reduziert werden kann, da die zwischen der Seitenfläche und der Außenfläche des Überstandes kein Umformvorgang erforderlich ist.

Am Überstand und/oder einer Seitenfläche der Halteschiene sind vorzugsweise Prägungen zur Verbesserung der Biegesteifigkeit des Überstandes und/oder der Seitenfläche vorgesehen. Die Prägungen können beispielsweise vom Überstand in eine an den Überstand anschließende Seitenfläche übergehen, so dass auch der Übergang zwischen dem Überstand und der Seitenfläche, also dem Haltebereich biegesteifer ausgebildet ist. Der Überstand bildet gemeinsam mit der angrenzenden Seitenfläche eine breite Auflagefläche zur Anbindung eines Geländers oder eines Handlaufs. Durch die Prägungen hat das Schienenelement eine höhere Steifigkeit, so dass eine stabilere Anbindung des Geländers oder des Handlaufs möglich ist. Die Prägungen können zudem ebenfalls durch Umformen in den Überstand und/oder den Haltebereich eingebracht werden, so dass diese einfach herzustellen sind.

Vorzugsweise sind die Prägungen vertikal verlaufende Sicken, die eine besondere hohe Biegesteifigkeit bieten, so dass ein Umknicken des Überstandes zuverlässig verhindert ist.

Die Auflagefläche kann optional eine seitlich über eine Seitenfläche hinausragende Verlängerung aufweisen, so dass eine breitere Auflagefläche bereitgestellt wird.

Die Verlängerung kann analog zum Überstand hergestellt werden. Beispielsweise ist die Verlängerung durch Umfalten eines Blechstreifens hergestellt ist, wobei der Blechstreifen an einem ersten Rand in eine Seitenfläche übergeht und an einem gegenüberliegenden zweiten Rand in die Auflagefläche übergeht.

Des Weiteren kann die Verlängerung durch zwei Lagen des Blechstreifens gebildet sein, die flächig aneinander anliegen, wobei die Lagen am freien Ende der Verlängerung mit einem Umformbereich verbunden sind.

Vorzugsweise weist die Halteschiene einen C-förmigen Querschnitt mit einer Aufnahmeöffnung auf, so dass herkömmliche Befestigungselemente zum Verbinden des Schienenelements mit dem Unterbau verwendet werden können. Diese Befestigungselemente greifen mit einer Gewindeplatte in die Aufnahmeöffnung ein und hintergreifen die Ränder der Aufnahmeöffnung. Anschließend wird die Gewindeplatte durch eine Gewindestange gegen einen Halteplatte, die auf einer Außenfläche eines mit dem Unterbau verbundenen Verbinders aufliegt, verspannt und das Schienenelement so am Verbinder bzw. am Unterbau fixiert.

Vorzugsweise ist die Aufnahmeöffnung gegenüberliegend zum Überstand, also auf der Unterseite, ausgebildet. Das Schienenelement kann dadurch auf einen Verbinder aufgelegt und an diesem befestigt werden, wobei die Belastungen auf das Befestigungselement, insbesondere Scherbelastungen durch die auf die Bodenelemente wirkenden Kräfte, gering gehalten werden. Die Kräfte werden von den Schienenelementen auf die Verbinder weitergeleitet, wobei die Befestigungselemente lediglich das Schienenelement am Verbinder fixieren, sich aber nicht im Kraftfluss befinden.

Das Schienenelement kann des Weiteren Aufnahmen für Befestigungsmittel zur Fixierung eines Bodenelements aufweisen, so dass die Bodenelemente sicher an den Schienenelementen fixiert werden können.

Vorzugsweise ist weiterhin ein Flurbodensystem mit zumindest einem vorstehend beschriebenen Schienenelement und mit zumindest einem Verbindungselement vorgesehen, mit dem das Schienenelement an einem Unterbau befestigt wird. Das Verbindungselement ist am Haltebereich fixierbar und stützt und/oder umgreift diesen seitlich. Das Schienenelement kann beispielsweise auf dem Verbindungselement aufliegen. Es ist aber auch möglich, dass das Verbindungselement so angeordnet ist, dass dieses an zumindest einer Seitenfläche anliegt, wodurch ein Kippen des Schienenelements verhindert wird.

Das Verbindungselement kann beispielsweise mit der Auflagefläche des Schienenelements abschließen.

Vorzugsweise sind die Auflageflächen der in einem Flurbodensystem verwendeten Schienenelemente auf einem Niveau, so dass eine ebene Auflage für die Bodenelemente entsteht. Dies kann beispielsweise dadurch erreicht werden, dass nur Schienenelemente mit einer Höhe verwendet werden und die Auflagen der Verbindungselemente auf einer höher angeordnet sind. Sind die Schienenelemente unterschiedlich hoch, kann bei Schienenelemente mit einer geringeren Höhe ein Ausgleichselement verwendet werden, das auch oder unter das Schienenelement gelegt wird. Soll das oben beschriebene Schienenelement in ein bestehendes System eingebaut werden, in dem die Winkelelemente aus dem Stand der Technik verbaut sind, kann auch ein Schienenelement mit einer größeren Höhe, insbesondere mit einem höheren Haltebereich, verwendet werden.

Optional kann ein Höhenausgleich auch über die Verbindungselemente erfolgen. Das Verbindungselement kann dazu zumindest zwei Schenkel mit jeweils einer Aufnahme für jeweils ein Schienenelement aufweisen, wobei die Aufnahmen jeweils eine Auflage für ein Schienenelement aufweisen. Die Höhen der Auflagen sind so gewählt, dass sich die Auflageflächen der auf den Auflagen aufliegenden Schienenelemente auf einer Höhe befinden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a und 1b: perspektivische Ansichten eines Flurbodensystems mit einem erfindungsgemäßen Schienenelement;
- Fig. 2: eine Draufsicht auf das Flurbodensystem aus Fig. 1a und Fig. 1b;
- Fig. 3a und 3b: eine perspektivische Ansicht sowie eine Schnittansicht durch das Schienenelement des Flurbodensystems aus Fig. 1a und Fig. 1b;
- Fig. 4a und 4b: eine perspektivische Ansicht sowie eine Schnittansicht durch eine zweite Ausführungsform eines Schienenelements des Flurbodensystems aus Fig. 1a und Fig. 1b; und
- Fig. 5a und 5b: eine perspektivische Ansicht sowie eine Schnittansicht durch eine dritte Ausführungsform eines Schienenelements des Flurbodensystems aus Fig. 1a und Fig. 1b.

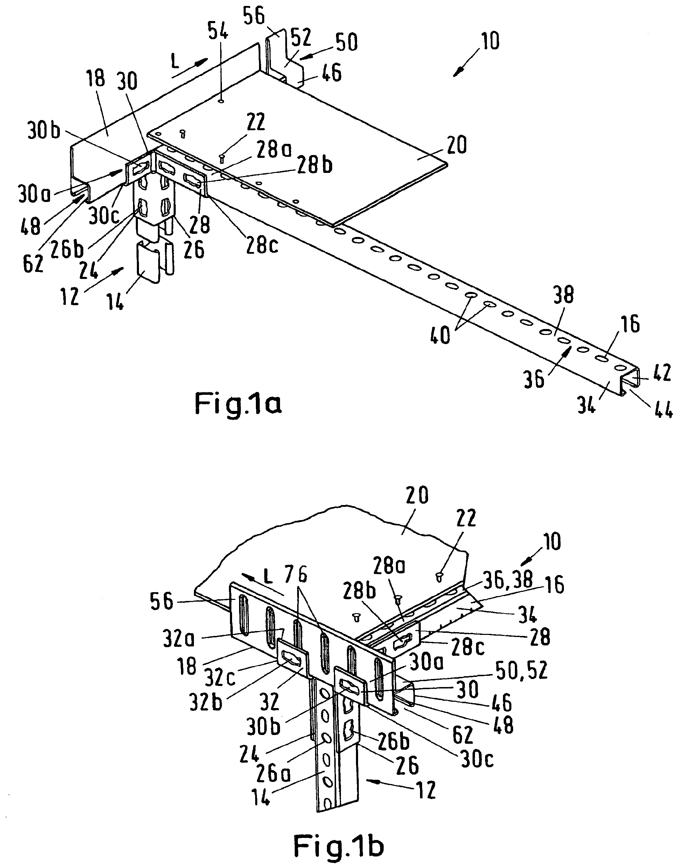

In den Figuren 1a und 1b ist ein Flurbodensystem 10 gezeigt. Ein solches Flurbodensystem 10 wird beispielswiese bei technischen Großanlagen oder im Schiffsbau verwendet, um ebene Laufwege oder Arbeitsplattformen, beispielsweise auf einem unebenen Untergrund und/oder in einer definierten Höhe, bereitzustellen.

Das Flurbodensystem 10 hat einen Unterbau 12, von dem hier lediglich ein senkrecht verlaufender Träger 14 dargestellt ist. Mit dem Unterbau 12 ist das Flurbodensystem 10 ortsfest fixiert, beispielsweise auf einem Untergrund oder an einem Anlagenteil.

Am Unterbau 12 sind mehrere Schienenelemente 16, 18 gehalten, die eine Auflage für Bodenelemente 20 bilden, die auf die Schienenelemente 16, 18 aufgelegt und an diesen mit Befestigungsmitteln 22, beispielsweise Nieten oder Schrauben, fixiert werden können. Die Schienenelemente 16, 18 sind über ein Verbindungselement 24 am Unterbau 12 befestigt.

Das Verbindungselement 24 hat vier abstehende Schenkel 26, 28, 30, 32, von denen die Schenkel 28, 30, 32 jeweils rechtwinklig zum Schenkel 26 und die Schenkel 30, 32 rechtwinklig zum Schenkel 28 angeordnet sind. Jeder Schenkel 26, 28, 30, 32 hat einen U-förmigen Querschnitt, durch den eine Aufnahme 26a, 28a, 30a, 32a für ein Schienenelement 16, 18 oder einen Träger 14 des Unterbaus 12 gebildet ist.

Die Schenkel 26, 28, 30, 32 weisen Öffnungen 26b, 28b, 30b, 32b zur Aufnahme eines nicht dargestellten Befestigungselements auf, mit dem das Verbindungselement mit dem Träger 14 bzw. einer der Schienenelemente 16, 18 verbunden werden kann. Die Aufnahmen 28a, 30a, 32a weisen jeweils eine Auflage 28c, 30c, 32c für ein Schienenelement 16, 18 auf.

Das Schienenelement 16 hat einen Haltebereich 34, mit dem das Schienenelement 16 am Verbindungselement 24 befestigt werden kann. Die Oberseite des Schienenelements 16 bildet einen Auflagebereich 36 mit einer Auflagefläche 38 für das Bodenelement 20. Auf der Oberseite sind des Weiteren Aufnahmen 40 für die Befestigungsmittel 22 vorgesehen. Das Schienenelement 16 ist im Querschnitt C-förmig ausgebildet und weist einen Aufnahmeraum 42 mit einer Aufnahmeöffnung 44 zur Aufnahme eines Befestigungselements auf.

Das Schienenelement 18 hat ebenfalls einen Haltebereich 46 mit einem C-förmigen Querschnitt und einem Aufnahmeraum 48 sowie einen Auflagebereich 50 mit einer Auflagefläche 52 und Aufnahmen 54 für Befestigungsmittel 28. Der Auflagebereich 50 hat des Weiteren einen rechtwinklig von der Auflagefläche 52 abstehenden Überstand 56.

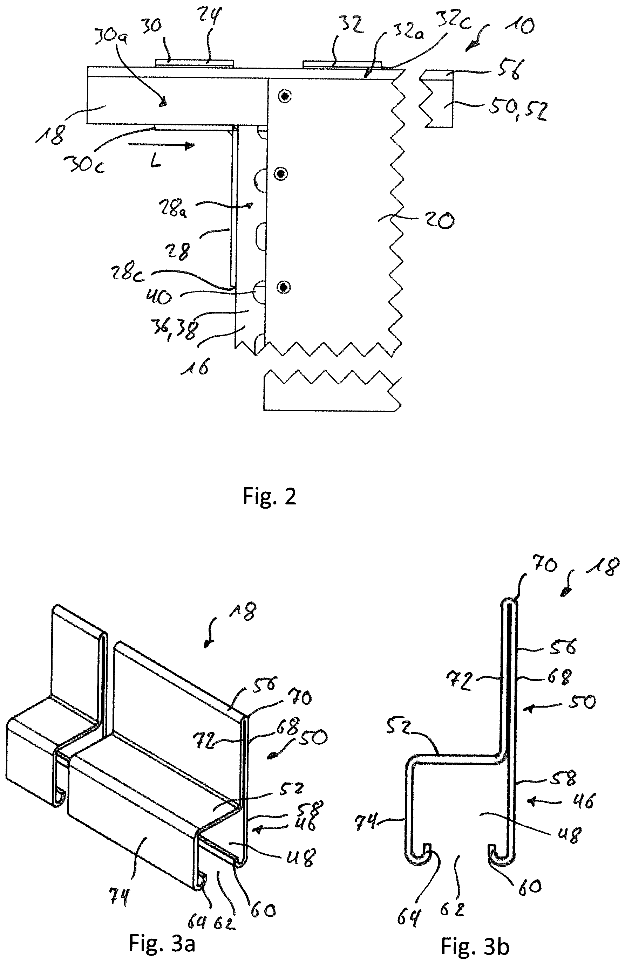

Dieser Überstand 56, der im Marinebereich auch allgemein als Süllkante bezeichnet wird, hat mehrere Funktionen. Zunächst bildet der Überstand 56, wie insbesondere in Figur 2 zu sehen ist, einen seitlichen Anschlag bzw. eine seitliche Positionierhilfe für die Bodenelemente 20, so dass diese unabhängig von den Befestigungsmitteln 22 vorfixiert bzw. positioniert sind. Des Weiteren bildet der Überstand 56 einen Schutz, der ein Herabfallen von Gegenständen, die auf den Bodenelementen 20 liegen, verhindert. Darüber hinaus kann am Überstand 56 sowie an der Seitenfläche 58, in die der Überstand 56 übergeht, ein Geländer oder ein Handlauf befestigt werden, wobei die mögliche Befestigungsfläche durch den Überstand 56 vergrößert bzw. erhöht wird.

Wie in Figuren 3a und 3b zu sehen ist, ist das Schienenelement 18 einstückig aus einem Blech durch Umformen hergestellt. Dabei werden einzelne Bereiches des Bleches entlang einer Kante bzw. eines Biegebereichs umgebogen und/oder abgeknickt. Alternativ könnte das Schienenelement 18 auch auf andere Weise einstückig hergestellt werden, beispielsweise mit einem Strangpressverfahren.

Wie in den Figuren 3a und 3b zu sehen ist, erstreckt sich das Blech von einem ersten Rand 60 der Aufnahmeöffnung 62 des Aufnahmeraums 48 bis einem gegenüberliegenden zweiten Rand 64 der Aufnahmeöffnung 62 und umschließt den Aufnahmeraum 48. Die Ränder 60, 64 sind jeweils zum Aufnahmeraum 48 hin umgebogen.

Vom ersten Rand 60 erstreckt sich das Blech in die erste Seitenfläche 58 des Haltebereichs 46, und geht von dieser in vertikaler Richtung in eine erste Lage 68 des Überstandes 56 über. Die erste Lage 68 erstreckt sich in vertikaler Richtung bis zu einem Umformbereich 70, an dem das Blech so umgefaltet ist, dass dieses mit einer zweiten Lage 72 flächig an der ersten Lage 68 anliegt.

Die zweite Lage 72 erstreckt sich bis zur Auflagefläche 52, die rechtwinklig zur zweiten Lage 72 umgebogen ist. Von der Auflagefläche 52 geht das Blech mit einem rechtwinkligen Biegebereich in eine zweite Seitenfläche 74 und von dieser in den zweiten Rand 64 über.

Wie in Figur 1b zu sehen ist, sind des Weiteren auf der Außenseite bzw. der ersten Lage 68 sowie der ersten Seitenfläche 66 Prägungen 76 vorgesehen, die durch vertikal, also quer zur Längsrichtung L des Schienenelements 18 verlaufende Sicken gebildet sind. Die Prägungen 76 sind ebenfalls durch Umformprozesse in das Schienenelement 18 eingebracht. Diese Prägungen 76 erhöhen die Biegesteifigkeit des Überstandes 56 bzw. zwischen Überstand 56 und Haltebereich 46.

Das gesamte Schienenelement 18 ist also durch Umformen aus einem ebenen Blech hergestellt. Es sind keine weiteren Fügeprozesse, wie ein gegenseitiges Ausrichten oder ein Schweißen einzelner Bauteile, erforderlich.

Die Dicke des Schienenelements 18 im Bereich der Auflagefläche 52 entspricht der Dicke der Auflagefläche 38 des Schienenelements 16. Des Weiteren ist die Höhe des Haltebereichs 46 bei beiden Schienenelementen 16, 18 gleich. Die Auflagen 28c, 30c, 32c befinden sich auf einer Höhe, so dass die Schienen 16, 18 so verbaut werden können, dass sich deren Unterkante auf einer Höhe befindet, sind somit auch die Auflageflächen 38, 52 auf einer Höhe. Zusätzliche Ausgleichselemente auf den Schienenelementen 16, 18, um sicherzustellen, dass sich die Auflageflächen 38, 52 auf der gleichen Höhe befinden, sind somit nicht erforderlich.

Die Erfindung ist nicht auf eine der vorbeschriebenen Ausführungsformen beschränkt, sondern in vielfältiger Weise abwandelbar.

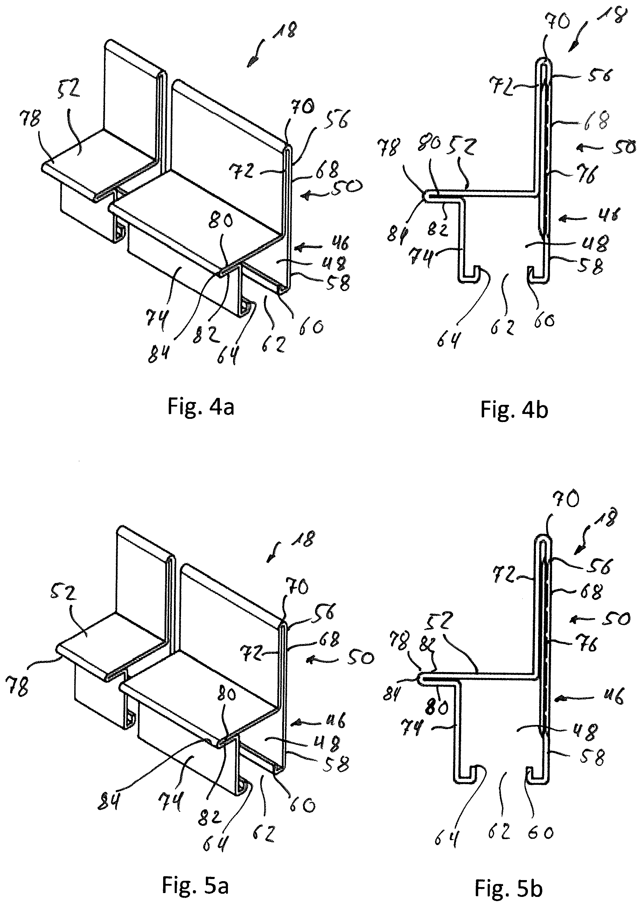

Eine zweite Ausführungsform eines Schienenelements 18 ist in den Figuren 4a und 4b gezeigt. Die Ausführungsform entspricht im Wesentlichen dem in den Figuren 3a und 3b gezeigten Schienenelement 18. Ergänzend ist eine seitliche Verlängerung 78 vorgesehen, durch die die Auflagefläche 52 verbreitert wird.

Die Verlängerung 78 weist analog zum Überstand 56 zwei Lagen 80, 82 auf, die an einem Umformbereich 84 miteinander verbunden sind. Die erste Lage 80 geht in die Auflagefläche 52 über, die zweite Lage 82 geht in die zweite Seitenfläche 74 über.

Wird ein solches Schienenelement 18 in dem Flurbodensystem 10 gemäß der Figur 1a und 1b verwendet, kann im Kontaktbereich des Schienenelements 18 und des Schienenelement 16 entweder die Verlängerung 78 oder das Schienenelement 16 so ausgeschnitten werden, dass die Haltebereiche 38, 52 aneinander anliegen können. Alternativ wird zwischen dem Schienenelement 18 und dem Schienenelement 16 ein Abstand vorgesehen, so dass nur die Verlängerung 78 am Schienenelement 16 anliegt.

In den Figuren 5a und 5b ist eine weitere Ausführungsform gezeigt, die im Wesentlichen der in den Figuren 4a und 4b gezeigten Ausführungsform entspricht. Die Seitenflächen 66, 74 sind lediglich länger ausgebildet, so dass die Höhe der Unterkante der Verlängerung 78 im Wesentlichen der Höhe der Auflagefläche 52 der Schienenelemente 18 aus den Figuren 3a und 3b bzw. den Figuren 4a und 4b sowie des Schienenelements 16 entspricht. Beispielsweise entspricht die Höhendifferenz der Dicke der Winkelelemente, die bei den bisher bekannten Schienenelementen verwendet werden, so dass das Schienenelement 18 gemäß der Figuren 5a und 5b als Ersatz für diese bzw. in Kombination mit diesen in bestehenden Flurbodensystemen 10 verwendet werden kann.

Optional können sich die Auflagen des Verbindungselements 24 auch auf verschiedenen Höhen befinden, beispielsweise, um einen Höhenausgleich für verschieden hohe Schienenelemente bereitzustellen, so dass sich die Auflageflächen 38, 52 auf einer Höhe befinden. Optional kann ein Höhenausgleich auch über Ausgleichselemente erfolgen, die auf die Auflagen 28c, 30c, 32c aufgelegt werden.

**Bezugszeichenliste**

| | | | |
|---|---|---|---|
| 10 | Flurbodensystem | 60 | erster Rand |
| 12 | Unterbau | 62 | Aufnahmeöffnung |
| 14 | Träger | 64 | zweiter Rand |
| 16 | Schienenelement | 68 | erste Lage des Überstandes |
| 18 | Schienenelement | 70 | Umformbereich |
| 20 | Bodenelement | 72 | zweite Lage des Überstandes |
| 22 | Befestigungselement | 74 | zweite Seitenfläche |
| 24 | Verbindungselement | 76 | Prägung |
| 26 | Schenkel des Verbindungselements | 78 | Verlängerung |
| 26a | Aufnahme des Schenkels | 80 | erste Lage der Verlängerung |
| 26b | Öffnungen an Schenkel | 82 | zweite Lage der Verlängerung |
| 28 | Schenkel des Verbindungselements | 84 | Umformbereich |
| 28a | Aufnahme des Schenkels | | |
| 28b | Öffnungen an Schenkel | | |
| 30 | Schenkel des Verbindungselements | | |
| 30a | Aufnahme des Schenkels | | |
| 30b | Öffnungen an Schenkel | | |
| 32 | Schenkel des Verbindungselements | | |
| 32a | Aufnahme des Schenkels | | |
| 32b | Öffnungen an Schenkel | | |
| 34 | Haltebereich | | |
| 36 | Auflagebereich | | |
| 38 | Auflagefläche | | |
| 40 | Aufnahme für Befestigungsmittel | | |
| 42 | Aufnahmeraum | | |
| 44 | Aufnahmeöffnung | | |
| 46 | Haltebereich | | |
| 48 | Aufnahmeraum | | |
| 50 | Auflagebereich | | |
| 52 | Auflagefläche | | |
| 54 | Aufnahme für Befestigungsmittel | | |
| 56 | Überstand | | |
| 58 | Seitenfläche | | |

## Patentansprüche

1. Flurbodensystem (10) mit wenigstens einem Bodenelement (20) und wenigstens einem Schienenelement (18) mit einem Haltebereich (46) zum Anbringen des Schienenelements (18) an einem Unterbau (12), der beispielsweise aus vertikalen und horizontalen Trägern besteht, die sich auf einem Untergrund oder an einer Maschine abstützen bzw. an diesen befestigt sind, und einem Auflagebereich (50) zum Anbringen des Bodenelements (20), wobei der Auflagebereich (50) eine Auflagefläche (52) für das Bodenelement (20) aufweist und das Schienenelement (18) einstückig aus einem Metallprofil hergestellt ist, wobei der Auflagebereich (50) einen Überstand (56) über die Auflagefläche (52) derart aufweist, dass ein Herunterfallen von auf dem Bodenelement (20) liegenden Gegenständen verhindert ist **dadurch gekennzeichnet,**
**dass** ein Geländer oder ein anderes zusätzliches Element des Flurbodensystems am Überstand befestigt werden kann.

2. Flurbodensystem nach Anspruch 1, **dadurch gekennzeichnet, dass** das Schienenelement (18) aus einem Blech durch Umformen hergestellt ist.

3. Flurbodensystem nach Anspruch 1 oder 2, **dadurch gekennzeichnet, dass** der Überstand (56) durch Umfalten eines Blechstreifens hergestellt ist, wobei der Blechstreifen an einem ersten Rand in die Auflagefläche (52) übergeht und an einem gegenüberliegenden zweiten Rand in eine Seitenfläche (58, 74) übergeht.

4. Flurbodensystemt nach Anspruch 3, **dadurch gekennzeichnet, dass** der Überstand (56) durch zwei Lagen (68, 72) des Blechstreifens gebildet ist, die flächig aneinander anliegen, wobei die Lagen (68, 72) am der Auflagefläche (52) abgewandten Ende mit einem Umformbereich (70) verbunden sind.

5. Flurbodensystem nach einem der vorhergehenden Ansprüche, **dadurch gekennzeichnet, dass** eine Außenfläche des Überstandes (56) in Verlängerung einer Seitenfläche (58, 74) des Haltebereiches (46) angeordnet ist.

6. Flurbodensystem nach einem der vorhergehenden Ansprüche, **dadurch gekennzeichnet, dass** am Überstand (56) und/oder einer Seitenfläche (58, 74) des Haltebereiches (46) Prägungen (76) zur Verbesserung der Biegesteifigkeit des Überstandes (56) und/oder der Seitenfläche (58, 74) vorgesehen sind.

7. Flurbodensystem nach Anspruch 6, **dadurch gekennzeichnet, dass** die Prägungen (76) vertikal verlaufende Sicken sind.

8. Flurbodensystem nach einem der vorhergehenden Ansprüche, **dadurch gekennzeichnet, dass** die Auflagefläche (52) eine seitlich über eine Seitenfläche (58, 74) hinausragende Verlängerung (78) aufweist.

9. Flurbodensystem nach Anspruch 8, **dadurch gekennzeichnet, dass** die Verlängerung (78) durch Umfalten eines Blechstreifens hergestellt ist, wobei der Blechstreifen an einem ersten Rand in eine Seitenfläche (58, 74) übergeht und an einem gegenüberliegenden zweiten Rand in die Auflagefläche (52) übergeht.

10. Flurbodensystem nach Anspruch 9, **dadurch gekennzeichnet, dass** die Verlängerung (78) durch zwei Lagen (80, 82) des Blechstreifens gebildet ist, die flächig aneinander anliegen, wobei die Lagen (80, 82) am freien Ende der Verlängerung (78) mit einem Umformbereich (84) verbunden sind.

11. Flurbodensystem nach einem der vorhergehenden Ansprüche, **dadurch gekennzeichnet, dass** der Haltebereich (46) einen C-förmigen Querschnitt mit einer Aufnahmeöffnung (62) aufweist.

12. Flurbodensystem nach Anspruch 11, **dadurch gekennzeichnet, dass** die Aufnahmeöffnung (62) gegenüberliegend zum Überstand (56) angeordnet ist.

13. Flurbodensystem nach einem der vorhergehenden Ansprüche, **dadurch gekennzeichnet, dass** das Schienenelement (18) Aufnahmen (54) für Befestigungsmittel (22) zur Fixierung eines Bodenelements (20) aufweist.

14. Flurbodensystem (10) nach einem der vorhergehenden Ansprüche, **dadurch gekennzeichnet, dass** zumindest ein Verbindungselement (24) vorgesehen ist, mit dem das Schienenelement (18) an einem Unterbau (12) befestigt wird, wobei das Verbindungselement (24) am Haltebereich (46) fixierbar ist und wobei das Verbindungselement (24) den Haltebereich (46) stützt und/oder seitlich umgreift.

15. Flurbodensystem nach Anspruch 14, **dadurch gekennzeichnet, dass** das Verbindungselement (24) zumindest zwei Schenkel (28, 30, 32) mit jeweils einer Aufnahme (28a, 30a, 32a) für jeweils ein Schienenelement (18) aufweist, wobei die Aufnahmen (28a, 30a, 32a) jeweils eine Auflage (28c, 30c, 32c) für ein Schienenelement (18) aufweisen, wobei die Höhe der Auflagen (28c, 30c, 32c) so gewählt ist, dass sich die Auflageflächen (52) der auf den Auflagen (28c, 30c, 32c) aufliegenden Schienenelemente (18) auf einer Höhe befinden.

16. Flurbodensystem nach einem der vorgehenden Ansprüche, **dadurch gekennzeichnet, dass** es für den Einsatz im Marinebereich auf Schiffen ausgebildet ist.

## Claims

1. Industrial floor system (10) having at least one floor element (20) and at least one rail element (18) with a retaining region (46) for attaching the rail element (18) to a substructure (12) which consists for example of vertical and horizontal beams which are supported on a base or on a machine or fastened thereto, and a support region (50) for attaching the floor element (20), wherein the support region (50) has a support surface (52) for the floor element (20) and the rail element (18) is produced in one piece from a metal profile, wherein the support region (50) has a projection (56) beyond the support surface (52) such that objects lying on the floor element (20) are prevented from falling down,
**characterised in**
**that** a railing or another additional element of the industrial floor system can be fastened to the projection.

2. Industrial floor system according to claim 1, **characterised in that** the rail element (18) is produced from a metal sheet by forming.

3. Industrial floor system according to claim 1 or 2, **characterised in that** the projection (56) is produced by folding a sheet metal strip, wherein the sheet metal strip merges into the support surface (52) at a first edge and merges into a side surface (58, 74) at an opposite second edge.

4. Industrial floor system according to claim 3, **characterised in that** the projection (56) is formed by two layers (68, 72) of the sheet metal strip which lie flat against one another, wherein the layers (68, 72) are connected to a forming region (70) at the end facing away from the support surface (52).

5. Industrial floor system according to any of the preceding claims, **characterised in that** an outer surface of the projection (56) is arranged in extension of a side surface (58, 74) of the retaining region (46).

6. Industrial floor system according to any of the preceding claims, **characterised in that** embossments (76) are provided on the projection (56) and/or a side surface (58, 74) of the retaining region (46) to improve the flexural rigidity of the projection (56) and/or of the side surface (58, 74).

7. Industrial floor system according to claim 6, **characterised in that** the embossments (76) are vertically extending beads.

8. Industrial floor system according to any of the preceding claims, **characterised in that** the support surface (52) has an extension (78) protruding laterally beyond a side surface (58, 74).

9. Industrial floor system according to claim 8, **characterised in that** the extension (78) is produced by folding a sheet metal strip, wherein the sheet metal strip merges into a side surface (58, 74) at a first edge and merges into the support surface (52) at an opposite second edge.

10. Industrial floor system according to claim 9, **characterised in that** the extension (78) is formed by two layers (80, 82) of the sheet metal strip which lie flat against one another, wherein the layers (80, 82) are connected to a forming region (84) at the free end of the extension (78).

11. Industrial floor system according to any of the preceding claims, **characterised in that** the retaining region (46) has a C-shaped cross-section with a receiving opening (62).

12. Industrial floor system according to claim 11, **characterised in that** the receiving opening (62) is arranged opposite the projection (56).

13. Industrial floor system according to any of the preceding claims, **characterised in that** the rail element (18) has receptacles (54) for fastening means (22) for fixing a floor element (20).

14. Industrial floor system (10) according to any of the preceding claims, **characterised in that** at least one connecting element (24) is provided by which the rail element (18) is fastened to a substructure (12), wherein the connecting element (24) can be fixed to the retaining region (46) and wherein the connecting element (24) supports and/or laterally surrounds the retaining region (46).

15. Industrial floor system according to claim 14, **characterised in that** the connecting element (24) has at least two limbs (28, 30, 32) each with a receptacle (28a, 30a, 32a) for a respective rail element (18), wherein the receptacles (28a, 30a, 32a) each have a support (28c, 30c, 32c) for a rail element (18), wherein the height of the supports (28c, 30c, 32c) is selected in such a way that the support surfaces (52) of the rail elements (18) resting on the supports (28c, 30c, 32c) are at the same height.

16. Industrial floor system according to any of the preceding claims, **characterised in that** it is designed for use in the maritime sector on ships.

## Revendications

1. Système de sol de couloir (10) avec au moins un élément de sol (20) et au moins un élément de rail (18) avec une zone de retenue (46) pour le montage de l'élément de rail (18) au niveau d'une base (12) qui se compose par exemple de supports verticaux et horizontaux qui s'appuient sur un fond ou contre une machine ou sont fixés à ceux-ci, et une zone d'appui (50) pour le montage de l'élément de sol (20), dans lequel la zone d'appui (50) présente une surface d'appui (52) pour l'élément de sol (20) et l'élément de rail (18) est fabriqué d'un seul tenant en un profil métallique, dans lequel la zone d'appui (50) présente un porte-à-faux (56) sur la surface d'appui (52) de telle manière qu'une chute d'objets se trouvant sur l'élément de sol (20) soit empêchée,
**caractérisé en ce**
**qu'**une balustrade ou un autre élément supplémentaire du système de sol de couloir peut être fixé au porte-à-faux.

2. Système de sol de couloir selon la revendication 1, **caractérisé en ce que** l'élément de rail (18) est fabriqué en une tôle par formage.

3. Système de sol de couloir selon la revendication 1 ou 2, **caractérisé en ce que** le porte-à-faux (56) est fabriqué par repliage d'un ruban de tôle, dans lequel le ruban de tôle passe au niveau d'un premier bord en la surface d'appui (52) et passe au niveau d'un second bord opposé en une surface latérale (58, 74).

4. Système de sol de couloir selon la revendication 3, **caractérisé en ce que** le porte-à-faux (56) est formé par deux couches (68, 72) du ruban de tôle qui reposent à plat l'une contre l'autre, dans lequel les couches (68, 72) sont reliées à l'extrémité éloignée de la surface d'appui (52) à une zone de formage (70).

5. Système de sol de couloir selon l'une quelconque des revendications précédentes, **caractérisé en ce qu'**une surface extérieure du porte-à-faux (56) est agencée en prolongement d'une surface latérale (58, 74) de la zone de retenue (46).

6. Système de sol de couloir selon l'une quelconque des revendications précédentes, **caractérisé en ce que** des estampages (76) sont prévus pour l'amélioration de la rigidité à la flexion du porte-à-faux (56) et/ou de la surface latérale (58, 74) au niveau du porte-à-faux (56) et/ou d'une surface latérale (58, 74) de la zone de retenue (46).

7. Système de sol de couloir selon la revendication 6, **caractérisé en ce que** les estampages (76) sont des moulures s'étendant verticalement.

8. Système de sol de couloir selon l'une quelconque des revendications précédentes, **caractérisé en ce que** la surface d'appui (52) présente un prolongement (78) dépassant latéralement d'une surface latérale (58, 74).

9. Système de sol de couloir selon la revendication 8, **caractérisé en ce que** le prolongement (78) est fabriqué par repliage d'un ruban de tôle, dans lequel le ruban de tôle passe au niveau d'un premier bord en une surface latérale (58, 74) et passe au niveau d'un second bord opposé en la surface d'appui (52).

10. Système de sol de couloir selon la revendication 9, **caractérisé en ce que** le prolongement (78) est formé par deux couches (80, 82) du ruban de tôle qui reposent à plat l'une contre l'autre, dans lequel les couches (80, 82) sont reliées à l'extrémité libre du prolongement (78) à une zone de formage (84).

11. Système de sol de couloir selon l'une quelconque des revendications précédentes, **caractérisé en ce que** la zone de retenue (46) présente une section transversale en forme de C avec une ouverture de réception (62).

12. Système de sol de couloir selon la revendication 11, **caractérisé en ce que** l'ouverture de réception (62) est agencée à l'opposé du porte-à-faux (56).

13. Système de sol de couloir selon l'une quelconque des revendications précédentes, **caractérisé en ce que** l'élément de rail (18) présente des logements (54) pour des moyens de fixation (22) pour la fixation d'un élément de sol (20).

14. Système de sol de couloir (10) selon l'une quelconque des revendications précédentes, **caractérisé en ce qu'**au moins un élément de liaison (24) est prévu, avec lequel l'élément de rail (18) est fixé à une base (12), dans lequel l'élément de liaison (24) peut être fixé à la zone de retenue (46) et dans lequel l'élément de liaison (24) appuie et/ou entoure latéralement la zone de retenue (46).

15. Système de sol de couloir selon la revendication 14, **caractérisé en ce que** l'élément de liaison (24) présente au moins deux branches (28, 30, 32) avec respectivement un logement (28a, 30a, 32a) pour respectivement un élément de rail (18), dans lequel les logements (28a, 30a, 32a) présentent respectivement un appui (28c, 30c, 32c) pour un élément de rail (18), dans lequel la hauteur des appuis (28c, 30c, 32c) est choisie de sorte que les surfaces d'appui (52) des éléments de rail (18) reposant sur les appuis (28c, 30c, 32c) se trouvent à une hauteur.

16. Système de sol de couloir selon l'une quelconque des revendications précédentes, **caractérisé en ce qu'**il est réalisé pour l'utilisation dans le secteur maritime sur des navires.
